# FASCICULE DE BREVET EUROPEEN

(11) **EP 3 907 079 B1**
(45) Date de publication et mention de la délivrance du brevet: **05.03.2025**
(21) Numéro de dépôt: 21170099.2
(22) Date de dépôt: 23.04.2021
(51) Int. Cl.: B32B 27/40, C08K 7/02, C09D 5/00, C09D 7/40, C09D 175/04, C09J 1/00, C09J 5/00, E04B 1/62, E04G 23/00, F01D 5/28

(54) **PROCÉDÉ D'ÉTANCHÉIFICATION COMPRENANT UNE ÉTAPE DE PROJECTION SIMULTANÉE DE GÉOPOLYMÈRE ET DE FIBRES**
WASSERDICHTER VERFAHREN, EINSCHLIESSLICH EINES GLEICHZEITIGEN PROJEKTIONSSCHRITTS VON GEOPOLYMER UND FASERN
WATERPROOFING PROCESS INCLUDING A SIMULTANEOUS STEP OF PROJECTION OF GEOPOLYMER AND FIBERS

(30) Priorité: 07.05.2020 FR 2004550
(43) Date de publication de la demande: 10.11.2021
(73) Titulaire: Societe Parisienne de Produits et Materiaux, 75016 Paris (FR)
(72) Inventeur: LOUCHART, Jean-Noël, 91470 Forge Les Bains (FR); CHAMPET, Simon, 91220 Bretigny Sur Orge (FR)
(74) Mandataire: Casalonga

(56) Documents cités:
- WO-A1-2019/122607
- FR-A1- 2 756 840
- FR-A1- 3 029 223
- FR-A1- 3 031 534

## Description

La présente invention porte sur un procédé d'étanchéification, résistant à la sous pression d'un fluide, par application d'une ou plusieurs couches à base de géopolymère (ou matériau alcali-activé) et de fibres.

Dans les nouvelles constructions, les espaces enterrés sont de plus en plus souvent aménagés en stations de métro, en parkings, en caves ou en habitations dotés de finitions et/ou équipements sensibles à l'humidité. Il est donc impératif de réaliser des ouvrages parfaitement étanches permettant de classer un local souterrain en local noble pour une activité humaine ou pour le stockage de marchandises ou de matériels sensibles à l'humidité, tels qu'une station de métro ou un local commercial.

L'étanchéité de ces ouvrages enterrés est généralement réalisée par un revêtement d'étanchéité posé à l'extrados de l'ouvrage. Ce revêtement est indifférent à la fissuration de l'ouvrage lui-même, car non-solidaire de l'ouvrage. En d'autres termes, même si l'ouvrage est fissuré, la fonction d'étanchéité du revêtement est assurée.

Cependant, à long terme, le revêtement d'étanchéité précité devient moins résistant et se fissure, entrainant une porosité de la surface à étancher. En effet, ces revêtements d'étanchéité sont généralement conçus pour être efficaces une vingtaine d'années, alors que les ouvrages qu'ils recouvrent sont bâtis pour généralement durer une centaine d'années. L'eau peut alors s'infiltrer à travers la surface et rendre un tel ouvrage impropre à sa destination d'origine. Ces fissures étant difficilement accessibles, leurs réparations s'avèrent en général délicates et non satisfaisantes.

L'étanchéité des ouvrages enterrés peut également se faire par un revêtement d'imperméabilisation posé en adhérence à l'intrados de l'ouvrage. Cependant, ces revêtements sont souvent dépendants du comportement de l'ouvrage à traiter. En effet, lorsque l'ouvrage est fissuré, la fonction d'étanchéité de ces revêtements internes peut ne plus être assurée.

Par ailleurs, ces revêtements posés à l'intrados des ouvrages ont tendance à se décoller lorsque la contrepression devient trop élevée. La pose d'un ouvrage de confinement, complémentaire au revêtement, est alors nécessaire afin d'éviter le décollement du revêtement.

Afin de surmonter ces différents inconvénients, il a été proposé dans le brevet FR 3 029 223 un procédé à base de résine organique. Ce revêtement intrados particulièrement résistant à la surpression présente néanmoins des difficultés d'application. En effet, la pose de l'armature de renfort nécessite un marouflage long et rigoureux pour que le tissu soit imprégné de résine.

Par ailleurs, ce procédé ne répond pas à la circulaire n°2000-63 qui impose pour la voûte des tunnels des revêtements extrêmement peu combustibles, c'est-à-dire de classe M0 vis-à-vis du feu, soit au plus A₂-S1,d0 en Euroclasse, et leur utilisation est limitée pour les ouvrages de grande profondeur où la température d'exploitation peut être supérieure à 35°C.

Par ailleurs, la demande FR 2 756 840 décrit des procédés de contre collage de renforts fibreux sur des structures en béton et en acier mettant en œuvre un composé géopolymérique aluminosilicate alcalin. La demande WO 2019/122607 décrit une couche de protection contre l'érosion à base de résine comprenant des fibres dispersées. La demande FR 3 031 534 décrit un procédé d'isolation phonique étanche basé sur la pose d'une résine époxy et d'une armature de renfort constituée d'une ou plusieurs nappes tissées.

Ainsi, il existe un réel besoin de développer un procédé d'étanchéification qui permette de surmonter les inconvénients cités ci-avant, et notamment d'obtenir un revêtement d'étanchéité de classe M0 vis-à-vis du feu, résistant à la sous pression même après déformation de la structure et à faible empreinte carbone.

Le procédé doit en outre être facile et rapide à appliquer sur toute sorte d'ouvrage ou de surface souterrains, saturée ou non en eau. Il doit également être accessible et facilement réparable.

Le procédé doit notamment apporter une étanchéité à l'eau, tout en résistant aux fissures de l'ouvrage à traiter.

Le procédé présente une réduction notable de l'impact carbone dû à l'absence de ciment Portland dans sa fabrication.

Il doit également permettre de réparer l'étanchéité d'un ouvrage préalablement étanché par un procédé externe et ainsi permettre de classer l'espace impropre en un espace noble à l'activité humaine ou au stockage de marchandise ou de matériel sensible à l'humidité.

La présente invention a donc pour objet un procédé d'étanchéification d'une surface comprenant :
a) une étape optionnelle d'application d'une composition A sur ladite surface, puis
b) une étape de projection simultanée d'une composition B et de fibres choisies parmi les fibres de basalte, de fonte, de carbone, d'aramide, de polyéthylène, de métal et alliages, les fibres naturelles, les fibres hybrides, les fibres de verre, les fibres plastiques, et leurs mélanges, de préférence parmi les fibres de verre alcali-résistant, lesdites fibres étant soit projetées simultanément à la composition B, soit mélangées préalablement à la composition B avant application de ladite composition B, puis
c) une étape optionnelle d'application d'une composition C,
les compositions A, B et C comprenant un liant géopolymère (ou matériau alcali-activé) pouvant être identique ou différent.

Les étapes a), b) et c) peuvent être répétées, de préférence deux ou trois fois, pour augmenter la résistance du revêtement.
[Fig 1A] représente un premier montage utilisé pour tester la résistance à la sous-pression d'une surface.
[Fig 1B] représente une vue en coupe dudit premier montage.
[Fig 2] représente un deuxième montage utilisé pour tester la résistance à la sous-pression d'une surface.

Le procédé selon la présente invention permet non seulement de rendre étanche un espace souterrain à l'eau, mais le revêtement d'étanchéité ainsi obtenu résiste également autant ou mieux à la contrepression et aux fissures de retrait et fissures fonctionnelles que les revêtements des procédés de l'art antérieur. En effet, la projection simultanée des fibres et du géopolymère permet d'obtenir un revêtement isotrope dans lequel les fibres sont complètement enrobées de géopolymère améliorant d'autant l'ancrage de cette couche de renfort sur la ou les couches de composition A éventuellement appliquées à l'étape a).

Par ailleurs, la couche de renfort, c'est-à-dire la couche comprenant le géopolymère et les fibres formée à l'issue de l'étape b) du procédé, épouse parfaitement la forme de la surface à traiter permettant ainsi une bonne adhérence du revêtement d'étanchéité sur l'ensemble de la surface. Le procédé de l'invention permet également de traiter les points singuliers complexes et les surfaces accidentées. La résistance du revêtement d'étanchéité est ainsi renforcée sur l'ensemble de la surface.

La projection des fibres permet en outre une mise en place complètement mécanisée, voire robotisée du procédé.

Le procédé de l'invention permet en outre de former des revêtements extrêmement peu combustibles, c'est-à-dire de classe M0 vis-à-vis du feu, soit au plus A₂-S₁,d₀ en Euroclasse et permet également d'étancher des ouvrages très profonds où la température est supérieure à 35°C et des pressions supérieures à 200m d'eau.

Enfin, le procédé selon la présente invention permet de classer un local souterrain en local noble pour une activité humaine ou pour le stockage de marchandises ou de matériels sensibles à l'humidité, tels qu'une station, couloir de métro ou locaux commerciaux, d'équipement de système de guidage automatique de train, gare souterraine, tunnel routier et ferroviaire.

L'invention a également pour objet un procédé pour réaliser in situ un revêtement sur une surface comprenant :
a) une étape optionnelle d'application d'une composition A sur ladite surface, puis
b) une étape de projection d'une composition B et de fibres choisies parmi les fibres de basalte, de fonte, de carbone, d'aramide, de polyéthylène, de métal et alliages, les fibres naturelles, les fibres hybrides, les fibres de verre, les fibres plastique, et leurs mélanges, de préférence parmi les fibres de verre alcali-résistant, lesdites fibres étant soit projetées simultanément à la composition B, soit mélangées préalablement à la composition B avant application de ladite composition B, puis
c) une étape optionnelle d'application d'une composition C,
les compositions A, B et C comprenant un liant géopolymère pouvant être identique ou différent.

L'invention a en outre pour objet l'utilisation du procédé décrit ci-avant pour étancher un tunnel de moins de 300 m de long ou d'au moins 300 m de long, le revêtement d'étanchéification obtenu par ledit procédé présentant un classement au feu au plus A₂-S₁,d₀.

L'invention a en outre pour objet l'utilisation du procédé décrit ci-avant pour étancher un ouvrage souterrain supportant une pression d'eau supérieure à 200 m et dans lequel règne une température supérieure à 35°C.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, l'expression « au moins un » utilisée dans la présente description est équivalente à l'expression « un ou plusieurs ».

Les compositions A, B et C mises en œuvre dans le procédé selon la présente invention comprennent des liants géopolymères.

Selon la présente invention, un liant géopolymère (ou simplement géopolymère) est un polymère minéral avec une structure aluminosilicatée ayant une microstructure amorphe aux rayons X à température ambiante.

Il est synthétisé à partir de la réaction entre une source aluminosilicatée telle que, par exemple, du métakaolin (ou autre argile), des cendres volantes, du laitier, ou un mélange de sources alumino-silicatées avec une solution silicatée en milieu alcalin ou acide, qui est par exemple une solution de silicate de potassium (ou de silicate de sodium) comprenant éventuellement de l'hydroxyde de potassium (ou respectivement de l'hydroxyde de sodium).

Un géopolymère peut être décrit par les rapports molaires des éléments qui le composent. Avantageusement, le ou les géopolymères de l'invention sont à base d'un ou plusieurs composés aluminosilicates et d'un ou plusieurs composés alcalin selon les rapports suivants, à l'état frais :
- le rapport Si/Al est compris entre 0,5 et 5, de préférence entre 1 et 4 ;
- le rapport M/Al, dans lequel M représente un atome de sodium (Na) ou de potassium (K), est inférieur ou égal à 5, de préférence inférieur ou égal à 2 ;
- le rapport H₂O/M₂O, dans lequel M représente un atome de sodium (Na) ou de potassium (K), est inférieur ou égal à 25, de préférence compris entre 8 et 20.

L'état frais du géopolymère est défini comme l'état du géopolymère au moment de sa synthèse, c'est-à-dire avant l'évaporation de l'eau.

Dans un mode de réalisation préféré, les compositions A, B et C résultent de la formulation suivante :
- une argile, par exemple de type métakaolin, comprenant 50 à 70%, de préférence 50 à 60%, de SiO₂ et 24 à 45%, de préférence 35 à 45%, de Al₂O₃.

De préférence, la composition A, B ou C comprend de 10 à 30% en poids, plus préférentiellement de 15 à 25% en poids, de ladite argile par rapport au poids total de la composition. La teneur en source aluminosilicatée des compositions A, B et C peut être identique ou différente.
- une solution silicatée à base de potassium ou de sodium et de pH supérieur ou égal à 9. Avantageusement, ladite solution silicatée comprend 15 à 50%, de préférence 20 à 35%, de SiO₂ et 10 à 30%, de préférence 15 à 20%, de M₂O, dans lequel M représente un atome de sodium (Na) ou de potassium (K).
- une ou plusieurs charges de type silice fine et/ou sable de granulométrie inférieure à 5mm.

Un exemple de telles charges contient par exemple moins de 10% de silice de granulométrie de 125µm, entre 5 et 15% en poids de silice de granulométrie de 250µm, et entre 25 et 35% de sable de granulométrie inférieure ou égale à 1mm, de préférence comprise entre 150µm et 600µm.
- optionnellement un laitier. De préférence, la teneur en laitier de la composition A, B ou C est inférieure ou égale à 20% en poids, par rapport au poids de la composition.
- optionnellement des additifs, adjuvants, plastifiant ou colorants.
- optionnellement des agents de cure. Les agents de cure permettent la compensation de fissuration de retrait. La création d'une couche ou encore la pulvérisation d'eau pour conserver un taux d'humidité acceptable dans le matériau peuvent être considérées comme agents de cure.

Selon un premier mode de réalisation, dans les étapes a) et c) du procédé de l'invention, les compositions A et C sont appliquées manuellement au rouleau ou à l'aide d'une machine d'application, alors que la composition B est projetée, de préférence à l'aide d'un pistolet, dans l'étape b).

Selon un autre mode de réalisation particulièrement préféré, les compositions A, B et C sont projetées, avantageusement à l'aide d'un pistolet, dans l'ensemble des étapes a), b) et c) de l'invention.

Avantageusement, la quantité totale de composition optionnelle A appliquée et/ou projetée sur la surface lors de l'étape a) va de 1kg.m⁻² à 10kg.m⁻².

De même, la quantité totale de composition B projetée sur la surface lors de l'étape b) va préférentiellement de 4 à 30 kg.m⁻².

La quantité totale de composition optionnelle C appliquée et/ou projetée sur la surface lors de l'étape c) va préférentiellement de 1 à 10 kg.m⁻².

Avantageusement, la quantité finale de composition (A+B+C), appliquée et/ou projetée sur la surface, est supérieure ou égale à 4 kg.m⁻², de préférence va de 4 à 40 kg.m⁻².

Par « quantité totale finale de composition (A+B+C) » au sens de la présente invention, on entend la quantité de composition (A+B+C) obtenue à l'issue du procédé, c'est-à-dire après réalisation des étapes a), b) et c).

En d'autres termes, la « quantité totale finale de composition (A+B+C) » correspond à la quantité de composition (A+B+C) présente sur la surface en fin du procédé selon la présente invention.

Les fibres projetées dans l'étape b) du procédé de l'invention sont choisies parmi les fibres de basalte, de fonte, de carbone, d'aramide, de polyéthylène, de métal, les fibres naturelles, les fibres hybrides, les fibres de verre, les fibres plastique, et leurs mélanges, de préférence parmi les fibres de verre alcali-résistant.

Les fibres projetées dans l'étape b) du procédé de l'invention sont soit projetées simultanément à la composition B, soit mélangées préalablement à la composition B avant application de ladite composition B.

Avantageusement, la longueur des fibres projetées va de 1 mm à 100 mm. La longueur de la fibre permet de faire varier la résistance du composite à la pression de l'eau et à la déformation du support.

Dans un mode de réalisation particulier, les fibres sont découpées par un découpeur à partir de fils constitués de plusieurs filaments. De façon avantageuse, un à trois fils peuvent être projetés en même temps. Il est ainsi possible de projeter en même temps des fils de natures différentes, tel que du basalte et du carbone. Pour un fil, la vitesse de coupe est avantageusement comprise entre 1,5 m/s et 15 m/s, de préférence entre 3m/s et 9 m/s. La quantité de fibres projetées dépend du Tex des fils, exprimé en g/km, et du nombre de fils introduit dans le découpeur (1 à 3). Le découpeur peut soit être couplé à la lance de projection, soit être déporté en amont, auquel cas les fibres sont acheminées à la tête de la lance de projection à travers une tuyère sous pression et débit contrôlé.

Dans un autre mode de réalisation particulier, les fibres projetées simultanément sont des fibres prédécoupées, lesdites fibres sont alors acheminées à la tête de la lance de projection à travers une tuyère sous pression et débit contrôlé.

Des fibres peuvent éventuellement en outre être appliquées à l'étape a). Selon un mode de réalisation particulier, lesdites fibres sont projetées simultanément à la composition A selon les modes de réalisations décrits ci-dessus, lesdites fibres sont choisies parmi les fibres décrites ci-avant. Dans un autre mode de réalisation, les fibres sont mélangées à la composition A préalablement à l'application de ladite composition A, lesdites fibres sont alors choisies parmi les microfibres, leur longueur étant inférieure à 15mm. A titre d'exemple, on peut citer les microfibres synthétiques telles que les microfibres de polypropylène ou d'autres plastiques, les microfibres de carbone, les microfibres de verre, ou encore les microfibres de métal.

Des fibres peuvent éventuellement en outre être appliquées à l'étape c). Selon un mode de réalisation particulier, lesdites fibres sont projetées simultanément à la composition C selon les modes de réalisations décrits ci-dessus, lesdites fibres sont choisies parmi les fibres décrites ci-avant. Dans un autre mode de réalisation, les fibres sont mélangées à la composition C préalablement à l'application de ladite composition C, lesdites fibres sont alors choisies parmi les microfibres, leur longueur étant inférieure à 15mm. A titre d'exemple, on peut citer les microfibres synthétiques telles que les microfibres de polypropylène ou d'autres plastiques, les microfibres de carbone, les microfibres de verre, ou encore les microfibres de métal.

La quantité totale de fibres projetées à l'étape b) va de préférence de 50 g/m² à 5000 g/m², plus préférentiellement de 200 g/m² à 3000 g/m².

La quantité de fibres permet de faire varier la résistance du composite.

Avantageusement, le rapport pondéral entre la quantité de fibres et la quantité totale finale de composition (A+B+C) va de 0,01 à 0,2.

De préférence, la pression de projection des compositions A, B ou C va de 1 à 50 bars. La pression permet de faire varier la distance entre la machine et le pistolet de projection, i.e. la longueur du transport de ladite composition.

L'étape b) peut être répétée plusieurs fois, de préférence deux ou trois fois, pour augmenter la quantité de fibres et ainsi, la résistance du composite.

Le procédé selon la présente invention peut éventuellement comprendre en outre au moins une étape de marouflage à l'issue de l'étape b). Les fibres, et plus particulièrement les fibres de verre, peuvent avoir tendance à se redresser. Une étape de marouflage entre les étapes b) et c) du procédé permet ainsi de coucher les fibres avant d'appliquer la ou les couches supplémentaires de composition C.

Une durée de durcissement de quelques heures, par exemple de 5 à 24 heures, permet d'obtenir la formation d'un revêtement homogène et résistant, améliorant ainsi le procédé de l'invention. En effet, le revêtement ainsi obtenu peut se déformer sans se rompre et présente un allongement à la rupture allant de préférence de 0,4 à 2%, plus préférentiellement de 0,85 à 1,5%. A titre d'exemple, une galette de 15mm d'épaisseur et de 140mm de diamètre résiste à une pression hydrostatique comprise entre 10 et 20 bars avec une déformation supérieure à 0.8%.

Le procédé selon la présente invention peut éventuellement comprendre en outre une première étape de préparation, c'est-à-dire de nettoyage, de la surface à traiter, préalablement à la mise en œuvre de la composition A lorsque celle-ci est présente ou de la composition B dans le cas contraire.

En d'autres termes, selon un mode de réalisation préféré, la surface à traiter est préalablement nettoyée, avant l'étape éventuelle a) d'application de la couche de composition A, telle que décrite précédemment.

A titre d'exemples de nettoyages (ou de procédés de nettoyage) utilisables selon la présente invention, on peut notamment citer le sablage à sec ou humide, le sablage hydropneumatique, le grenaillage, le décapage hydraulique à 40 MPa, le rabotage et le ponçage diamanté.

Par « sablage », on entend au sens de la présente invention, un procédé permettant de projeter sur une surface bétonnée ou en maçonnerie des granulats à l'aide d'air comprimé. De préférence, la taille des granulats va de 0,5 à 2 mm.

Par « grenaillage », on entend au sens de la présente invention, un procédé consistant à projeter par effet centrifuge des billes d'acier sur une surface bétonnée, les diamètres des billes d'acier utilisées vont avantageusement de 0,7 à 2 mm.

De préférence, le procédé de nettoyage est choisi parmi le sablage à sec, le grenaillage et le rabotage.

Cette étape de traitement de la surface à étancher permet un meilleur ancrage des couches de composition (A).

Le procédé selon la présente invention peut éventuellement comprendre en outre une étape préalable de ragréage à l'aide d'un mortier hydraulique ou à l'aide de la composition A.

Le procédé selon la présente invention est destiné à être appliqué sur tout type de surface interne d'un ouvrage souterrain. En d'autres termes, le procédé selon la présente invention est destiné à être appliqué sur l'intrados d'un ouvrage souterrain.

Par « ouvrage souterrain » au sens de la présente invention, on entend les tranchées couvertes, les passages souterrains sous plate-forme routière, autoroutière et ferroviaire, les espaces souterrains enterrés, tels que les parkings, les gares ferroviaires et les stations de métro, les tunnels creusés et les tunnels forés, les infrastructures de bâtiment, ou tout ouvrage soumis à une pression d'eau d'une nappe phréatique ou d'eau d'infiltration.

Les surfaces destinées à être étanchées avec le procédé de l'invention peuvent être en béton armé ou non armé, en mortier, en béton précontraint ou en maçonnerie porteuse de petits éléments tels que des parpaings, des briques ou des pierres.

En particulier, le procédé de l'invention est destiné à être appliqué sur les voûtes et en sous-face des dalles supérieures des tunnels, des parkings souterrains ou des tranchées couvertes, les piédroits et les voiles verticaux des tranchées couvertes, les radiers des tunnels ou des tranchées couvertes.

L'invention a également pour objet un procédé pour réaliser in situ un revêtement sur une surface comprenant :
a) une étape optionnelle d'application d'une composition A sur ladite surface, puis
b) une étape de projection d'une composition B et de fibres choisies parmi les fibres de basalte, de fonte, de carbone, d'aramide, de polyéthylène, de métal et alliages, les fibres naturelles, les fibres hybrides, les fibres de verre, les fibres plastique, et leurs mélanges, de préférence parmi les fibres de verre alcali-résistant, lesdites fibres étant soit projetées simultanément à la composition B, soit mélangées préalablement à la composition B avant application de ladite composition B, puis
c) une étape optionnelle d'application d'une composition C,
les compositions A, B et C comprenant un liant géopolymère pouvant être identique ou différent.

Les caractéristiques du procédé d'étanchéité décrites précédemment s'appliquent pour réaliser in situ un revêtement sur ladite surface.

L'invention a en outre pour objet l'utilisation du procédé décrit ci-avant pour étancher un tunnel de moins de 300 m de long ou d'au moins 300 m de long, le revêtement d'étanchéification obtenu par ledit procédé présentant un classement au feu au plus A₂-S₁,d₀.

L'invention a en outre pour objet l'utilisation du procédé décrit ci-avant pour étancher un ouvrage sous-marin supportant une pression d'eau supérieure à 200 m et dans lequel règne une température supérieure à 35°C.

Les exemples suivants servent à illustrer l'invention sans toutefois présenter un caractère limitatif.

### EXEMPLES

### Exemple 1

On réalise l'étanchéification d'une surface de béton selon le procédé de l'invention.

Une première couche de composition A est appliquée par projection sur la surface du béton à raison de 10kg.m⁻².

Immédiatement après, c'est-à-dire sans attendre le séchage, une deuxième couche de composition B et de fibres de basalte est appliquée par projection à raison de 30kg.m⁻² pour la composition B et de 100g.m⁻² pour les fibres de basalte.

La surface est ensuite marouflée afin d'aplanir lesdites fibres. Immédiatement après, c'est-à-dire sans attendre le séchage, une troisième couche de composition C est appliquée par projection à raison de 4kg.m⁻².

### Exemple 2

On réalise l'étanchéification d'une surface de béton selon le procédé de l'invention.

Une première couche de composition A est appliquée par projection sur la surface du béton à raison de 4kg.m⁻².

Un temps de séchage de 24h est ensuite observé.

Puis, une deuxième couche de composition A est appliquée par projection sur la surface du béton à raison de 4kg.m^{-2.}

De façon simultanée, c'est-à-dire sans attendre le séchage, une troisième couche de composition B et de fibres de verre alcali-résistant est appliquée par projection à raison de 4kg.m⁻² pour la composition B et de 100g.m⁻² pour les fibres de verre alcali-résistant.

La surface est ensuite marouflée afin d'aplanir lesdites fibres.

Immédiatement après, c'est-à-dire sans attendre le séchage, une troisième couche de composition C est appliquée par projection à raison de 6kg.m⁻².

### Exemple 3

Des tests de résistance à la sous-pression ont été réalisés sur différents échantillons et suivant deux méthodes.

### a) Méthodes

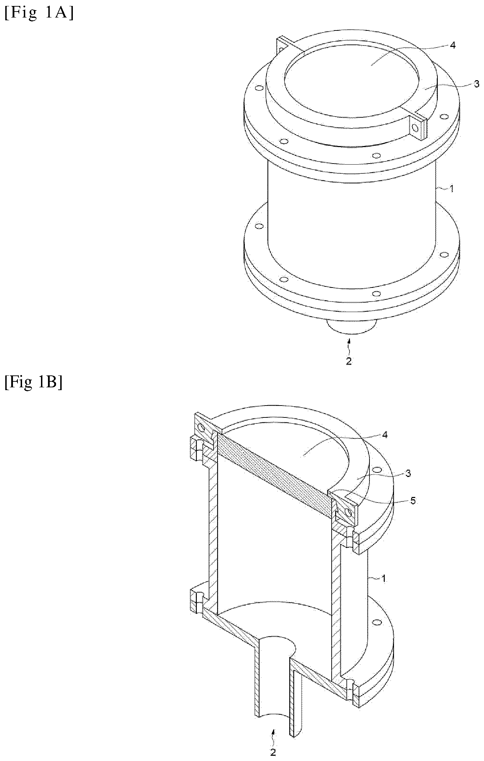

[Fig 1A] et [Fig 1B] décrivent le montage utilisé dans la première méthode. Ce montage est constitué d'un socle métallique (1) comprenant une arrivée d'eau (2) et un serre-joint métallique (3). Une pastille (4) de l'échantillon à tester (composite géopolymère selon l'invention ou comparatif) est fabriquée par moulage. Cette pastille a la géométrie d'un disque de 14cm de diamètre et de 15mm d'épaisseur environ. La pastille est encerclée par un joint caoutchouc et maintenue par le serre-joint métallique (3) et au retour du serre-joint (5), le joint caoutchouc assurant l'imperméabilité à l'interface échantillon-métal. Une bouteille de gaz sous pression équipée d'un manomètre pour contrôler la pression injectée est reliée à une bonbonne d'eau, elle-même reliée à l'arrivée d'eau (2) par une tuyauterie résistant à la pression injectée.

Lors du test d'étanchéité la pression est augmentée par palier de 0.5 bars par tranche de 2 minutes. On observe alors la déformation à la surface supérieure (non exposée à l'eau) de la pastille et on mesure la pression de rupture de ladite pastille.

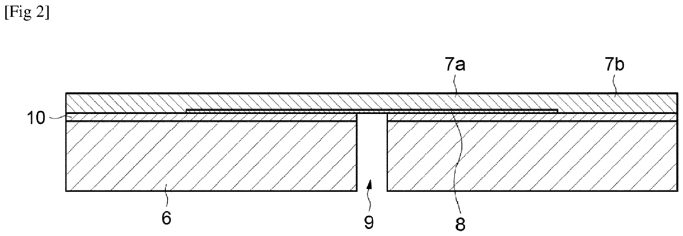

[Fig 2] décrit le montage utilisé dans la deuxième méthode. Cette méthode met en œuvre un support béton (6) sur lequel repose l'échantillon à tester (composite géopolymère selon l'invention ou comparatif) (7) comprenant une couche désolidarisée (7a) et une couche en adhérence (7b) au support béton (6). La couche désolidarisée (7a) repose sur une surface de désolidarisation (8) située à l'aplomb d'un trou (9) permettant une arrivée d'eau. Entre le support béton (6) et l'échantillon (7), une couche primaire (10) est éventuellement présente. Comme dans la première méthode, lors du test d'étanchéité la pression est augmentée par palier de 0.5 bars par tranche de 2 minutes. On observe la déformation à la surface supérieure (non exposée à l'eau) de la couche désolidarisée et on mesure la pression de rupture de ladite couche.

### b) Résultats

- Des essais de résistance à la pression ont été réalisés selon la première méthode (sur pastille) en comparant un produit commercial (mortier de réparation de classe R4) (comparatif) à des composites géopolymères comprenant des fibres de verre ou de basalte (invention).

Les résultats sont indiqués dans le tableau ci-dessous.

**[Tableau 1]**

| Echantillon | Déformation (%) | Pression de rupture (bars) |
|---|---|---|
| Comparatif | 0,5% | 4 bars |
| Géopolymère avec fibres de verre | 0,8% | 4 bars |
| Géopolymère avec fibres de basalte | ≥0,8% | ≥6 bars |

Les matériaux composites selon l'invention présentent une déformation supérieure à celle du comparatif, le géopolymère comprenant des fibres de basalte rompt en outre à une pression supérieure à l'échantillon comparatif.

Les composites selon l'invention présentent donc une meilleure étanchéité et une plus grande résistance à la pression que les matériaux comparatifs.
- Des essais de résistance du composite géopolymère ont été également effectués selon la deuxième méthode (méthode sur support béton), cette méthode étant plus représentative des conditions réelles. Lors des tests selon cette deuxième méthode, le géopolymère comprenant les fibres de basalte rompt à des pressions supérieures à 10 bars avec des déformations supérieures à 0,8%.

Ces résultats confirment donc les performances du composite géopolymère avec fibres de basalte (selon l'invention) en terme d'étanchéité et de résistance à la pression, avec des déformations sous contrainte acceptables.

## Revendications

1. Procédé d'étanchéification d'une surface comprenant :
a) une étape optionnelle d'application d'une composition A sur ladite surface, puis
b) une étape de projection d'une composition B et de fibres choisies parmi les fibres de basalte, de fonte, de carbone, d'aramide, de polyéthylène, de métal et alliages, les fibres naturelles, les fibres hybrides, les fibres de verre, les fibres plastique, et leurs mélanges, de préférence parmi les fibres de verre alcali-résistant, lesdites fibres étant soit projetées simultanément à la composition B, soit mélangées préalablement à la composition B avant application de ladite composition B, puis
c) une étape optionnelle d'application d'une composition C,
les compositions A, B et C comprenant un liant géopolymère (ou matériaux alcali-activé) pouvant être identique ou différent.

2. Procédé selon la revendication précédente, **caractérisé en ce que** le ou les liants géopolymères sont à base d'un ou plusieurs composés aluminosilicate et d'un ou plusieurs composés alcalins selon les rapports molaires à l'état frais : Si/Al compris entre 0,5 et 5, de préférence entre 1 et 4, M/Al inférieur ou égal à 5, de préférence inférieur ou égal à 2, où M représente Na ou K, et H₂O/K₂O inférieur ou égal à 25, de préférence compris entre 8 et 20.

3. Procédé selon l'une quelconque des revendications précédentes, **caractérisé en ce que** les compositions A et C appliquées aux étapes a) et c) sont appliquées par projection sur la surface.

4. Procédé selon l'une quelconque des revendications précédentes, **caractérisé en ce que** la quantité totale finale de composition (A+B+C) appliquée sur la surface est supérieure ou égale à 4kg.m⁻², de préférence va de 4 à 40kg.m⁻².

5. Procédé selon l'une quelconque des revendications précédentes, **caractérisé en ce que** des fibres sont appliquées à l'étape a), lesdites fibres étant soit projetées simultanément à la composition A, soit mélangées préalablement à la composition A avant application de ladite composition A, lesdites fibres étant alors choisies parmi les microfibres, leur longueur étant inférieure à 15mm.

6. Procédé selon l'une quelconque des revendications précédentes, **caractérisé en ce que** des fibres sont appliquées à l'étape c), lesdites fibres étant soit projetées simultanément à la composition C, soit mélangées préalablement à la composition C avant application de ladite composition C, lesdites fibres étant alors choisies parmi les microfibres, leur longueur étant inférieure à 15mm.

7. Procédé selon l'une quelconque des revendications précédentes, **caractérisé en ce que** la quantité totale finale de fibres projetées à l'étape b) va de 50 à 5000g.m⁻², de préférence de 200 à 3000g.m⁻².

8. Procédé selon l'une quelconque des revendications précédentes, **caractérisé en ce que** la longueur des fibres projetées va de 1 à 100mm.

9. Procédé selon l'une quelconque des revendications précédentes, **caractérisé en ce que** le rapport pondéral entre la quantité totale de fibres et la quantité totale finale de composition (A+B+C) va de 0,01 à 0,2.

10. Procédé selon l'une quelconque des revendications précédentes, **caractérisé en ce qu'**il comprend au moins une étape de marouflage réalisée entre les étapes b) et c).

11. Procédé selon l'une quelconque des revendications précédentes, **caractérisé en ce qu'**il comprend en outre une étape préalable à l'étape a) de traitement de la surface.

12. Procédé selon l'une quelconque des revendications précédentes, **caractérisé en ce qu'**il est destiné à être appliqué à l'intrados d'un ouvrage souterrain.

13. Procédé selon l'une quelconque des revendications précédentes, **caractérisé en ce qu'**il est destiné à être appliqué sur une ou plusieurs surfaces telles que les voûtes et les sous-faces des dalles supérieures des tunnels ou des tranchées couvertes, les piédroits et les voiles verticaux des tranchées couverts, les radiers des tunnels ou des tranchées couvertes.

14. Procédé pour réaliser in situ un revêtement sur une surface comprenant :
a) une étape optionnelle d'application d'une composition A sur ladite surface, puis
b) une étape de projection d'une composition B et de fibres choisies parmi les fibres de basalte, de fonte, de carbone, d'aramide, de polyéthylène, de métal et alliages, les fibres naturelles, les fibres hybrides, les fibres de verre, les fibres plastique, et leurs mélanges, de préférence parmi les fibres de verre alcali-résistant, lesdites fibres étant soit projetées simultanément à la composition B, soit mélangées préalablement à la composition B avant application de ladite composition B, puis
c) une étape optionnelle d'application d'une composition C,
les compositions A, B et C comprenant un liant géopolymère pouvant être identique ou différent.

15. Utilisation du procédé selon l'une quelconque des revendications 1 à 13 pour étancher un tunnel de moins de 300 m de long ou d'au moins 300 m de long, le revêtement d'étanchéification obtenu par ledit procédé présentant un classement au feu au plus A₂-S₁,d₀.

16. Utilisation du procédé selon l'une quelconque des revendications 1 à 13 pour étancher un ouvrage sous-marin supportant une pression d'eau supérieure à 200 m et dans lequel règne une température supérieure à 35°C.

## Patentansprüche

1. Verfahren zum Abdichten einer Oberfläche, das Folgendes umfasst:
a) einen optionalen Schritt des Auftragens einer Zusammensetzung A auf die Oberfläche, anschließend
b) einen Schritt des Aufsprühens einer Zusammensetzung B und von Fasern, die aus Basalt-, Gusseisen-, Kohlenstoff-, Aramid-, Polyethylen-, Metall- und Legierungsfasern, Naturfasern, Hybridfasern, Glasfasern, Kunststofffasern und Mischungen davon, vorzugsweise aus alkalibeständigen Glasfasern, ausgewählt werden, wobei die Fasern entweder gleichzeitig mit der Zusammensetzung B aufgesprüht werden oder vor dem Auftragen der Zusammensetzung B zuvor mit der Zusammensetzung B vermischt werden, anschließend
c) einen optionalen Schritt des Auftragens einer Zusammensetzung C,
wobei die Zusammensetzungen A, B und C ein Geopolymer-Bindemittel (oder alkalisch aktivierte Materialien) umfassen, das gleich oder verschieden sein kann.

2. Verfahren nach dem vorhergehenden Anspruch, **dadurch gekennzeichnet, dass** das oder die Geopolymer-Bindemittel auf einer oder mehreren Aluminosilikatverbindungen und einer oder mehreren alkalischen Verbindungen basieren, je nach den Molverhältnissen im frischen Zustand: Si/Al liegt zwischen 0,5 und 5, vorzugsweise zwischen 1 und 4, M/Al ist kleiner oder gleich 5, vorzugsweise kleiner oder gleich 2, wobei M für Na oder K steht, und H₂O/K₂O ist kleiner oder gleich 25 und liegt vorzugsweise zwischen 8 und 20.

3. Verfahren nach einem der vorhergehenden Ansprüche, **dadurch gekennzeichnet, dass** die in den Schritten a) und c) aufgetragenen Zusammensetzungen A und C durch Aufsprühen auf die Oberfläche aufgetragen werden.

4. Verfahren nach einem der vorhergehenden Ansprüche, **dadurch gekennzeichnet, dass** die endgültige Gesamtmenge der auf die Oberfläche aufgetragenen Zusammensetzung (A+B+C) größer oder gleich 4 kg.m⁻² ist und vorzugsweise zwischen 4 und 40 kg.m⁻² liegt.

5. Verfahren nach einem der vorhergehenden Ansprüche, **dadurch gekennzeichnet, dass** in Schritt a) Fasern aufgetragen werden, wobei die Fasern entweder gleichzeitig mit der Zusammensetzung A aufgetragen werden oder vor dem Auftragen der Zusammensetzung A zuvor mit der Zusammensetzung A vermischt werden, wobei die Fasern dann aus Mikrofasern ausgewählt werden, wobei deren Länge weniger als 15 mm beträgt.

6. Verfahren nach einem der vorhergehenden Ansprüche, **dadurch gekennzeichnet, dass** in Schritt c) Fasern aufgetragen werden, wobei die Fasern entweder gleichzeitig mit der Zusammensetzung C aufgesprüht werden oder vor dem Auftragen der Zusammensetzung C zuvor mit der Zusammensetzung C vermischt werden, wobei die Fasern dann aus Mikrofasern ausgewählt werden, wobei deren Länge weniger als 15 mm beträgt.

7. Verfahren nach einem der vorhergehenden Ansprüche, **dadurch gekennzeichnet, dass** die endgültige Gesamtmenge der in Schritt b) aufgesprühten Fasern zwischen 50 und 5.000 g.m⁻², vorzugsweise zwischen 200 und 3.000 g.m⁻², liegt.

8. Verfahren nach einem der vorhergehenden Ansprüche, **dadurch gekennzeichnet, dass** die Länge der aufgesprühten Fasern zwischen 1 und 100 mm beträgt.

9. Verfahren nach einem der vorhergehenden Ansprüche, **dadurch gekennzeichnet, dass** das Gewichtsverhältnis zwischen der Gesamtmenge der Fasern und der endgültigen Gesamtmenge der Zusammensetzung (A+B+C) zwischen 0,01 und 0,2 liegt.

10. Verfahren nach einem der vorhergehenden Ansprüche, **dadurch gekennzeichnet, dass** es mindestens einen Schritt des Anklebens umfasst, der zwischen den Schritten b) und c) durchgeführt wird.

11. Verfahren nach einem der vorhergehenden Ansprüche, **dadurch gekennzeichnet, dass** es vor Schritt a) ferner einen Schritt der Oberflächenbehandlung umfasst.

12. Verfahren nach einem der vorhergehenden Ansprüche, **dadurch gekennzeichnet, dass** es dazu bestimmt ist, auf der unteren Oberfläche eines unterirdischen Bauwerks angewandt zu werden.

13. Verfahren nach einem der vorhergehenden Ansprüche, **dadurch gekennzeichnet, dass** es dazu bestimmt ist, auf einer oder mehreren Oberflächen wie etwa auf Gewölben und Unterseiten der Deckplatten von Tunneln oder Tagbautunneln, den Seitenwänden und den vertikalen Wänden von Tagbautunneln und Fundamente von Tunneln oder Tagbautunneln angewandt zu werden.

14. Verfahren zum Herstellen einer Beschichtung auf einer Oberfläche in situ, das Folgendes umfasst:
a) einen optionalen Schritt des Auftragens einer Zusammensetzung A auf die Oberfläche, anschließend
b) einen Schritt des Aufsprühens einer Zusammensetzung B und von Fasern, die aus Basalt-, Gusseisen-, Kohlenstoff-, Aramid-, Polyethylen-, Metall- und Legierungsfasern, Naturfasern, Hybridfasern, Glasfasern, Kunststofffasern und Mischungen davon, vorzugsweise aus alkalibeständigen Glasfasern, ausgewählt werden, wobei die Fasern entweder gleichzeitig mit der Zusammensetzung B aufgesprüht werden oder vor dem Auftragen der Zusammensetzung B zuvor mit der Zusammensetzung B vermischt werden, anschließend
c) einen optionalen Schritt des Auftragens einer Zusammensetzung C,
wobei die Zusammensetzungen A, B und C ein Geopolymer-Bindemittel umfassen, das gleich oder verschieden sein kann.

15. Verwendung des Verfahrens nach einem der Ansprüche 1 bis 13 zum Abdichten eines Tunnels mit einer Länge von weniger als 300 m oder mit einer Länge von mindestens 300 m, wobei die durch das Verfahren erhaltene Abdichtungsbeschichtung eine Brandschutzklassifizierung von höchstens A₂-S₁,d₀ aufweist.

16. Verwendung des Verfahrens nach einem der Ansprüche 1 bis 13 zum Abdichten eines Unterwasserbauwerks, das einem Wasserdruck von mehr als 200 m standhält und in dem eine Temperatur von mehr als 35 °C herrscht.

## Claims

1. Method for sealing a surface comprising:
a) an optional step of applying a composition A onto said surface, then
b) a step of projecting a composition B and fibres selected from basalt, cast iron, carbon, aramid, polyethylene, metal and alloy fibres, natural fibres, hybrid fibres, glass fibres, plastic fibres, and mixtures thereof, preferably alkali-resistant glass fibres, said fibres being projected either simultaneously with composition B, or mixed with composition B prior to the application of said composition B, then
c) an optional step of applying a composition C,
the compositions A, B and C comprising a geopolymer binder (or alkali-activated material) which may be identical or different.

2. Method according to the preceding claim, **characterised in that** the geopolymeric binder or binders are based on one or more aluminosilicate compounds and one or more alkali compounds in molar ratios in the fresh state of: Si/Al between 0.5 and 5, preferably between 1 and 4, M/Al less than or equal to 5, preferably less than or equal to 2, where M represents Na or K, and H₂O/K₂O less than or equal to 25, preferably between 8 and 20.

3. Method according to any one of the preceding claims, **characterised in that** compositions A and C applied in steps a) and c) are applied by projecting onto the surface.

4. Method according to any one of the preceding claims, **characterised in that** the final total quantity of composition (A+B+C) applied to the surface is greater than or equal to 4 kg.m⁻², preferably ranges from 4 to 40 kg.m⁻².

5. Method according to any one of the preceding claims, **characterised in that** fibres are applied in step a), said fibres being either projected simultaneously with composition A, or mixed previously with composition A prior to the application of said composition A, said fibres then being selected from microfibres, their length being less than 15 mm.

6. Method according to any one of the preceding claims, **characterised in that** fibres are applied in step c), said fibres being either projected simultaneously with composition C, or mixed previously with composition C prior to the application of said composition C, said fibres then being selected from microfibres, their length being less than 15 mm.

7. Method according to any one of the preceding claims, **characterised in that** the final total quantity of fibres projected in step b) ranges from 50 to 5000 g.m⁻², preferably from 200 to 3000 g.m⁻².

8. Method according to any one of the preceding claims, **characterised in that** the length of the projected fibres ranges from 1 to 100 mm.

9. Method according to any one of the preceding claims, **characterised in that** the weight ratio between the total quantity of fibres and the final total quantity of composition (A+B+C) ranges from 0.01 to 0.2.

10. Method according to any one of the preceding claims, **characterised in that** it comprises at least one marouflage step performed between steps b) and c).

11. Method according to any one of the preceding claims, **characterised in that** it further comprises a step of surface treatment prior to step a).

12. Method according to any one of the preceding claims, **characterised in that** it is intended to be applied to the intrados of an underground structure.

13. Method according to any one of the preceding claims, **characterised in that** it is intended to be applied to one or more surfaces such as the vaults and undersurfaces of the upper slabs of tunnels or covered trenches, the jambs and the vertical walls of covered trenches, the base slabs of tunnels or covered trenches.

14. Method for forming in situ a coating on a surface comprising:
a) an optional step of applying a composition A onto said surface, then
b) a step of projecting a composition B and fibres selected from basalt, cast iron, carbon, aramid, polyethylene, metal and alloy fibres, natural fibres, hybrid fibres, glass fibres, plastic fibres, and mixtures thereof, preferably from alkali-resistant glass fibres, said fibres being either projected simultaneously with composition B, or mixed previously to composition B prior to the application of said composition B, then
c) an optional step of applying a composition C,
the compositions A, B and C comprising a geopolymer binder which can be identical or different.

15. Use of the method according to any one of claims 1 to 13 for sealing a tunnel less than 300 m long or at least 300 m long, the sealing coating obtained by said method having a fire classification of at most A₂-S₁,d₀.

16. Use of the method according to any one of claims 1 to 13 for sealing an underwater structure under a water pressure greater than 200 m and in which the temperature is greater than 35°C.
